# EUROPEAN PATENT APPLICATION

(11) **EP 3 975 533 A1**
(43) Date of publication of application: **30.03.2022**
(21) Application number: 20855085.5
(22) Date of filing: 11.08.2020
(51) Int. Cl.: H04M 3/42

(54) **METHOD, TERMINAL, AND SYSTEM FOR ACQUIRING TERMINAL STATE, AND COMPUTER READABLE STORAGE MEDIUM**

(30) Priority: 22.08.2019 CN 201910776961
(71) Applicant: ZTE Corporation, Shenzhen, Guangdong 518057 (CN)
(72) Inventor: YIN, Yunpu, Shenzhen, Guangdong 518057 (CN)
(74) Representative: Canzler & Bergmeier Patentanwälte Partnerschaft mbB
(86) International application number: PCT/CN2020/108369
(87) International publication number: WO 2021/031922

(57) **Abstract**

The present application provides a method for acquiring a terminal state, applied to a client terminal, comprising: sending a state request to a server terminal to obtain the current state machine of the server terminal, wherein the state machine comprises a network state and a call state; receiving a current state machine of the server terminal sent by the server terminal, and displaying the current state of the server terminal according to the current state machine of the server terminal. Accordingly, the present application further provides a terminal and a system for acquiring a terminal state, and a computer readable storage medium.

## Description

### TECHNICAL FIELD

The present disclosure relates to, but is not limited to, the field of communication technologies.

### BACKGROUND

As communication tools, mobile phones are used to meet most of call needs of people. As the pace of life accelerates, the call needs of people are growing. But an existing mobile phone cannot determine a status of a called party before a number is dialed, and can determine whether the called party can normally answer a call only by ringing tones heard in a dialling process. The ringing tones may indicate the following cases:
(1) Being normally connected (beep ... beep ..., a customized ringing tone, etc.);
(2) The called party cannot be connected temporarily /is not in service;
(3) The called party is power off; and
(4) The called party is busy now.

Only the case (1) is expected by a caller, and the caller cannot get through in the current dialling process in the other three cases.

It can be seen that the status of the called party can be acquired only through manual dialling and cannot be acquired automatically in the existing art. In particular, whether the current call is failed, that is, the called party is power off, cannot be connected or is busy, can only be known after the number is dialed, and each failed call takes the caller 4 to 10 seconds. The more the call needs, the more the failed calls, which may take the caller a large amount of time and energy.

### SUMMARY

In a first aspect, an embodiment of the present disclosure provides a method for acquiring a terminal status, which is applied to a client terminal, including: sending a status request to a service terminal to acquire a current state machine of the service terminal, with the state machine including a network status and a call status; and receiving the current state machine of the service terminal sent by the service terminal, and displaying a current status of the service terminal according to the current state machine of the service terminal.

In a second aspect, an embodiment of the present disclosure provides a method for acquiring a terminal status, which is applied to a service terminal, including: receiving a status request sent by a client terminal; and determining whether to respond to the status request sent by the client terminal.

In a third aspect, an embodiment of the present disclosure provides a method for acquiring a terminal status, including: sending a status request by a client terminal to a service terminal to acquire a current state machine of the service terminal, with the state machine including a network status and a call status; receiving, by the service terminal, the status request sent by the client terminal and determining, by the service terminal, whether to respond to the status request sent by the client terminal; and receiving, by the client terminal, the current state machine of the service terminal sent by the service terminal, and displaying, by the client terminal, a current status of the service terminal according to the current state machine of the service terminal.

In a fourth aspect, an embodiment of the present disclosure provides a client terminal, including a first status transceiving module and a display module. The first status transceiving module is configured to send a status request to a service terminal to acquire a current state machine of the service terminal, with the state machine including a network status and a call status, and is further configured to receive the current state machine of the service terminal sent by the service terminal; and the display module is electrically connected to the first status transceiving module, and is configured to display a current status of the service terminal according to the current state machine of the service terminal received by the first status transceiving module.

In a fifth aspect, an embodiment of the present disclosure provides a service terminal, including a second status transceiving module and a second setting module. The second status transceiving module is configured to receive a status request sent by a client terminal; the second setting module is electrically connected to the second status transceiving module, and is configured to determine whether to respond to the status request which is sent by the client terminal and received by the second status transceiving module; and the second status transceiving module is further configured to send a current state machine of the service terminal to the client terminal under the control of the second setting module.

In a sixth aspect, an embodiment of the present disclosure provides a system for acquiring a terminal status, including a client terminal and a service terminal. The client terminal is configured to send a status request to the service terminal to acquire a current state machine of the service terminal, with the state machine including a network status and a call status; the service terminal is configured to receive the status request sent by the client terminal and determine whether to respond to the status request sent by the client terminal; and the client terminal is further configured to receive the current state machine of the service terminal sent by the service terminal and display a current status of the service terminal according to the current state machine of the service terminal.

In a seventh aspect, an embodiment of the present disclosure provides a terminal, including a memory and a processor. The memory stores an instruction, and the processer runs the instruction to perform the method for acquiring a terminal status applied to a client terminal, and/or, the processer runs the instruction to perform the method for acquiring a terminal status applied to a service terminal.

In an eighth aspect, the present disclosure provides a computer-readable storage medium having a computer program stored therein. When the computer program is executed, the method for acquiring a terminal status applied to a client terminal or the method for acquiring a terminal status applied to a service terminal is performed.

### BRIEF DESCRIPTION OF THE DRAWINGS

Fig. 1 is a flowchart illustrating a method for acquiring a terminal status according to a first embodiment of the present disclosure;
Fig. 2 is a flowchart illustrating a method for acquiring a terminal status according to a second embodiment of the present disclosure;
Fig. 3 is a flowchart illustrating a method for acquiring a terminal status according to a third embodiment of the present disclosure;
Fig. 4 is a schematic diagram illustrating a process of communication between a client terminal and a service terminal according to the third embodiment of the present disclosure;
Fig. 5 is a schematic structural diagram of a client terminal according to a fourth embodiment of the present disclosure;
Fig. 6 is a schematic structural diagram of a service terminal according to a fifth embodiment of the present disclosure;
Fig. 7 is a schematic diagram of an application environment according to a sixth embodiment of the present disclosure;
Fig. 8 is a flowchart illustrating a method for acquiring a terminal status according to the sixth embodiment of the present disclosure;
Fig. 9 is a schematic diagram of a GRTS request message Request according to the sixth embodiment of the present disclosure;
Fig. 10 is a schematic diagram of a GRTS response message Response according to the sixth embodiment of the present disclosure; and
Fig. 11 is a schematic structural diagram of a terminal according to a seventh embodiment of the present disclosure.

### DETAILED DESCRIPTION

To enable those of ordinary skill in the art to better understand the technical solutions of the present disclosure, a method, terminal and system for acquiring a terminal status, and a computer-readable storage medium of the present disclosure are further described in detail below with reference to the accompanying drawings and embodiments. It should be understood that the embodiments and the features thereof can be arbitrarily combined with each other in the case of no conflict.

### First Embodiment

The embodiment provides a method for acquiring a terminal status. A terminal may be a mobile phone, a telephone watch, a vehicle-mounted computer, or other electronic devices with a call function, and it should be noted that a terminal which sends a status request is a client terminal, and a terminal which returns a status is a service terminal. The method in the embodiment may be applied to a client terminal or an application in a client terminal. The application in the client terminal may be a new call record/new contact of Rich Communication Services (RCS) or another instant messaging application.

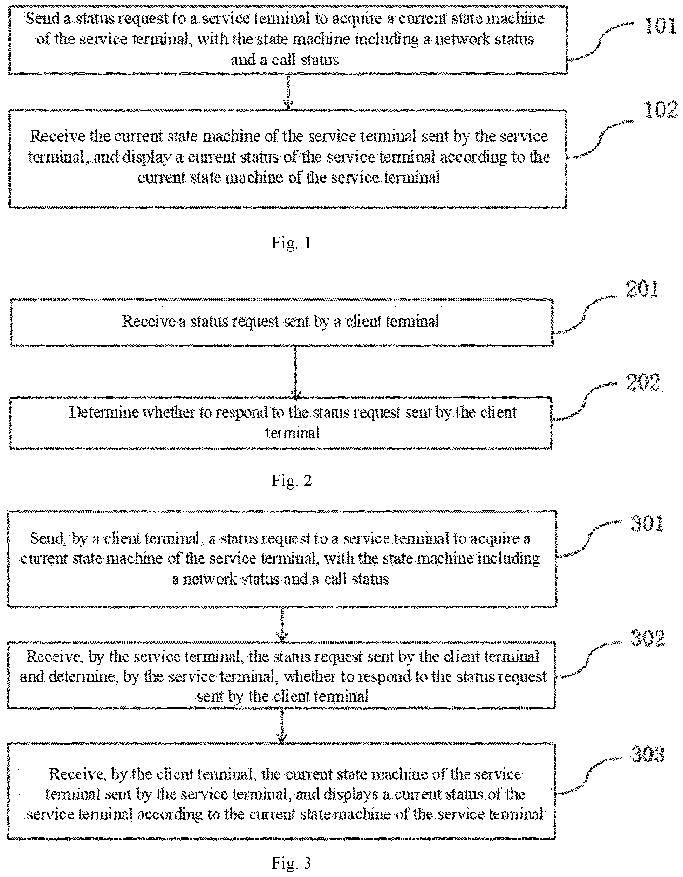

The method for acquiring a terminal status is described in detail below with reference to Fig. 1. As shown in Fig. 1, the method may include operations 101 and 102.

At the operation 101, a status request is sent to a service terminal to acquire a current state machine of the service terminal, and the state machine includes a network status and a call status.

In the embodiment, the service terminal determines the current state machine thereof by monitoring a network registration status and the call status of the service terminal. For example, when the service terminal is in an airplane mode, encounters poor network signal or in a shielded room, the current state machine of the service terminal is set to Service Unavailable (that is, "Service Unavailable" in the following examples which indicates that a phone cannot be connected). A type of the state machine may be defined according to user needs.

In the embodiment, a client terminal sends the status request to the service terminal according to triggering of a trigger condition, and the trigger condition includes one of:
initialization is performed;
time set for a timing request expires; and
an address book is started.

Sending the status request to the service terminal according to the triggering of the trigger condition includes: determining whether to send the status request to the service terminal according to a status setting of the client terminal when the trigger condition is satisfied, sending the status request to the service terminal if the status setting is on, and terminating the process of acquiring the terminal status if the status setting is off, that is, no status request is sent to the service terminal.

In the embodiment, the condition that initialization is performed refers to that the client terminal performs system initialization, for example, the client terminal performs the system initialization when the client terminal is started or restarted. The condition that time set for a timing request expires refers to that duration of a timing request expires, and a value of the duration may be set by a user, or may be preset in the client terminal. The condition that an address book is started refers to that a user opens an address book. When any one of the above trigger conditions occurs, the client terminal is triggered to determine whether to send the status request to the service terminal according to the status setting of the client terminal, the client terminal sends the status request to the service terminal if the status setting is on, and the client terminal terminates the process of acquiring the terminal status if the status setting is off. The status setting is set by the user according to his or her needs, so as to improve user experience. For example, when a user has no need to make a call during a conference, the user may set the status setting of a carried terminal to be off, so that the terminal does not acquire a status from a service terminal.

In an example, sending the status request to the service terminal by the client terminal is sending a status request code for acquiring the current state machine of the service terminal to the service terminal according to a Get Remote Telephony Status (GRTS) protocol, which includes extracting, by the client terminal, a user number of the client terminal, all contact numbers in an address book, a timestamp and a serial number, encapsulating the user number of the client terminal, all the contact numbers in the address book, the timestamp and the serial number according to the GRTS protocol into the status request code, and sending the encapsulated status request code to all service terminals (that is, terminals corresponding to all contacts in the address book of the client terminal) by broadcasting.

In the embodiment, an application layer protocol, namely the GRTS protocol, is made to carry out communication between the client terminal and the service terminal. The GRTS protocol, as a request response protocol, is executed above User Datagram Protocol (UDP). A format of the GRTS protocol and the specific content of the status request are described in detail with reference to the drawings in the following description. In the embodiment, the client terminal broadcasts a status request message to all service terminals in the address book to acquire statuses of all contacts in the address book. It should be noted that sending the status request by the client terminal to one or more specific service terminals also falls within the scope of the present disclosure.

At the operation 102, the current state machine of the service terminal sent by the service terminal is received, and a current status of the service terminal is displayed according to the current state machine of the service terminal.

In an example, the client terminal receives a response code which contains the current state machine of the service terminal and is sent by the service terminal, parses the received response code according to the GRTS protocol to obtain the current state machine of the service terminal, and displays the current status of the service terminal according to the obtained current state machine of the service terminal; and the state machine has various types such as busy and free.

In an example, the client terminal may display the current status of the service terminal in corresponding color according to a mapping relationship between different colors and different statuses.

In the embodiment, status types of a terminal include, but are not limited to, free, busy, dialling, ringing and service unavailable. Any status type capable of allowing the user to determine whether a call is put through is included in the scope of the present disclosure. The client terminal may display the current status of the service terminal according to the obtained current state machine of the service terminal in a plurality of ways. For example, one way is to add information about status type in text form to each call record or information of each contact in a user interface. Or, a mapping relationship between different colors and different statues is preset in the client terminal, the client terminal obtains the current status of the service terminal after receiving the current state machine sent by the service terminal, and then displays different status types for all call records or all contacts in the corresponding colors in the user interface, for example, red is configured to indicate that the called party is busy, blue is configured to indicate that the called party is free, and yellow is configured to indicate service unavailable. In such a way, the user at the client terminal may quickly recognize which number may be connected and which number may not be connected, and text information of the call records or the contacts displayed in the terminal interface is not increased.

The existing method for acquiring a terminal status is that a calling terminal dials a number of a called terminal and acquires a status of the called terminal according to a ringing tone, so that the method requires manual operation by a user and is time-consuming and labor-consuming. Especially in a case where the user has a great number of call needs, the number of failed calls increases, which affects the user experience.

According to the operations 101 and 102 of the method of the present disclosure, the status request is sent to the service terminal to obtain the current state machine of the service terminal, the current state machine of the service terminal returned from the service terminal is received, and the current status of the service terminal is displayed in the corresponding color according to the mapping relationship between the different colors and the different statues. The method can achieve automatic acquisition of the terminal status and is simple and convenient, and can enable the user to acquire the status of the called terminal in real time, thereby avoiding the failed calls.

### Second Embodiment

The embodiment provides a method for acquiring a terminal status, and a terminal may be a mobile phone, a telephone watch, a vehicle-mounted computer, or other electronic devices with a call function. The method in the embodiment is applied to a service terminal or an application in a service terminal. The application in the service terminal may be a new call record/new contact of RCS or another instant messaging application. As shown in Fig. 2, the method for acquiring a terminal status provided by the embodiment may include operations 201 and 202.

At the operation 201, a status request sent by a client terminal is received.

In an example, before the operation of receiving the status request sent by the client terminal, the method further includes: storing a current state machine of a service terminal, the state machine including a network status and a call status.

In the embodiment, the service terminal determines the current state machine thereof by monitoring a network registration status and the call status of the service terminal, and stores the current state machine of the service terminal.

At the operation 202, it is determined whether to respond to the status request sent by the client terminal.

If the status request is to be responded to, the current state machine of the service terminal is sent to the client terminal; and if the status request is not to be responded to, the status request sent by the client terminal is discarded.

In an example, the service terminal determines whether to respond to the status request sent by the client terminal according to a status setting of the service terminal, the service terminal responds to the status request if the status setting is on, and the service terminal does not respond to the status request if the status setting is off.

In the embodiment, the status setting is set by a user according to his or her needs, which can improve user experience and ensure security of user information. For example, if a user wants to protect his or her personal information from being read by anyone, the user may set a status setting in a terminal to be off, so that the terminal does not allow any client terminal to attempt to acquire a user status.

In an example, the status request is to be responded to if the status setting is on. Before the operation of responding to the status request, the method further includes: parsing a status request code for acquiring the current state machine of the service terminal, which is sent by the client terminal, according to the GRTS protocol.

In the embodiment, since the client terminal encapsulates the status request for acquiring the current state machine of the service terminal into the status request code according to the GRTS protocol and sends the status request code to the service terminal, the service terminal needs to parse the received status request code according to the same GRTS protocol. Firstly, the service terminal obtains a GRTS request packet and a user number of the client terminal by parsing the status request, and then determines whether to allow a GRTS request or whether to allow a GRTS request of the user number of the client terminal at the same time according to the status setting, and responds to the status request if the status setting is on or a status setting for the user number of the client terminal is on.

In an example, if the status setting is on, the status request is responded to. After it is determined to respond to the status request, the method further includes: encapsulating a response code containing the current state machine of the service terminal according to the GRTS protocol, and sending the encapsulated response code to the client terminal.

In an example, the user number of the client terminal, a user number of the service terminal, a timestamp, a serial number and the current state machine of the service terminal are encapsulated according to the GRTS protocol.

In the embodiment, if the status setting is on, response information is encapsulated in a format of the GRTS protocol. The user number of the client terminal, the serial number and the timestamp in the request packet are filled in the response information, and then the stored current state machine of the service terminal, the user number of the service terminal and other information are filled according to the format of the GRTS protocol. The encapsulation of the response code is completed after all fields are filled, and then the encapsulated response code is sent to the client terminal. The format of the GRTS protocol and the specific content of the response code are described in detail with reference to the drawings in the following description.

### Third Embodiment

As shown in Fig. 3, the embodiment of the present disclosure provides a method for acquiring a terminal status, which may include operations 301 to 303.

At the operation 301, a client terminal sends a status request to a service terminal to acquire a current state machine of the service terminal, and the state machine includes a network status and a call status.

In an example, the client terminal sends the status request to the service terminal according to triggering of a trigger condition, which includes one of:
initialization is performed;
time set for a timing request expires; and
an address book is started.

In an example, when the trigger condition is satisfied, the client terminal determines whether to send the status request to the service terminal according to a status setting of the client terminal, the client terminal sends the status request to the service terminal if the status setting is on, and the client terminal terminates the process of acquiring the terminal status if the status setting is off, that is, the client terminal does not send the status request to the service terminal.

When the status setting of the client terminal is on, sending the status request to the service terminal by the client terminal is sending a status request code for acquiring the current state machine of the service terminal to the service terminal according to the GRTS protocol, which includes extracting, by the client terminal, a user number of the client terminal, all contact numbers in an address book, a timestamp and a serial number, encapsulating the user number of the client terminal, all the contact numbers in the address book, the timestamp and the serial number according to the GRTS protocol into the status request code, and sending the encapsulated status request code to all service terminals by broadcasting.

At the operation 302, the service terminal receives the status request sent by the client terminal and determines whether to respond to the status request sent by the client terminal.

In an example, the operation of determining by the service terminal whether to respond to the status request sent by the client terminal includes: sending current status information of the service terminal to the client terminal if the service terminal determines to respond to the status request; and discarding the status request sent by the client terminal if the service terminal determines not to respond to the status request.

The service terminal determines whether to respond to the status request sent by the client terminal according to a status setting of the service terminal, the service terminal responds to the status request if the status setting is on, and the service terminal does not respond to the status request if the status setting is off.

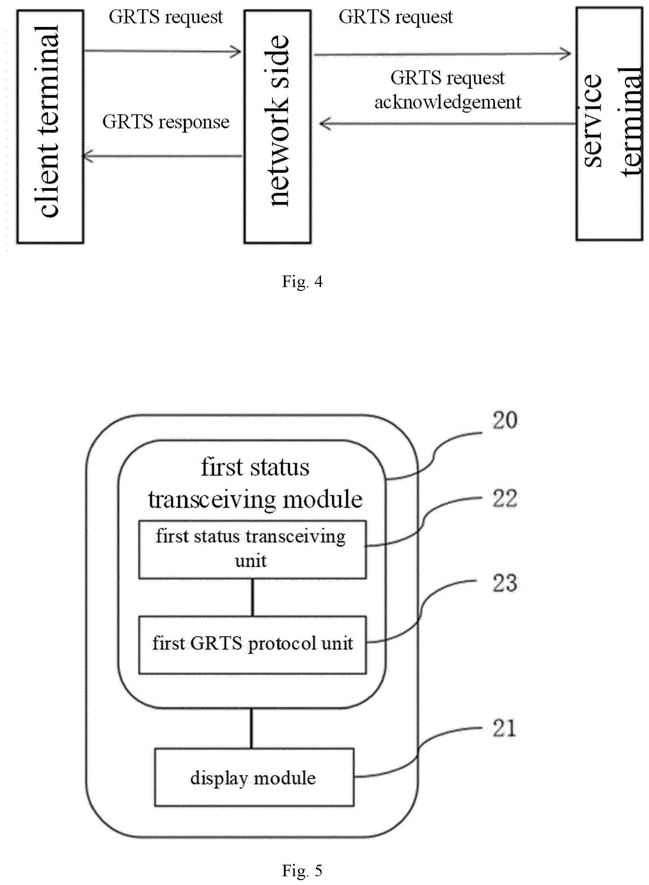

In the embodiment, as shown in Fig. 4, the client terminal and the service terminal communicate with each other according to the GRTS protocol, and a network side is configured to transmit communication information between the client terminal and the service terminal. Since the client terminal encapsulates the user number of the client terminal, all the contact numbers in the address book, the timestamp and the serial number into the status request code according to the GRTS protocol and sends the status request code to the service terminal, the service terminal needs to parse the received status request code according to the GRTS protocol, and then determines whether to respond to the status request according to the status setting of the service terminal. If the service terminal determines to respond to the status request, the service terminal needs to encapsulate response contents into a response code according to the GRTS protocol and sends the response code to the client terminal, the response contents are the same as those in the second embodiment, and the response code includes the current state machine of the service terminal.

At the operation 303, the client terminal receives the current state machine of the service terminal sent by the service terminal, and displays a current status of the service terminal according to the current state machine of the service terminal.

Exemplarily, the client terminal receives the response code containing the current state machine of the service terminal, which is sent by the service terminal, parses the received response code according to the GRTS protocol to obtain the current state machine of the service terminal, and displays the current status of the service terminal according to the obtained current state machine of the service terminal.

The current status of the service terminal is displayed in a corresponding color according to the current state machine of the service terminal and a mapping relationship between different colors and different statuses. The specific display method is the same as that in the first embodiment.

In an example, after the operation 301 and before the operation 302, the method further includes: storing, by the service terminal, the current state machine of the service terminal.

### Fourth Embodiment

The embodiment provides a client terminal. As shown in Fig. 5, the client terminal includes: a first status transceiving module 20 and a display module 21.

The first status transceiving module 20 is configured to send a status request to a service terminal to acquire a current state machine of the service terminal, which includes a network status and a call status, and is further configured to receive the current state machine of the service terminal sent by the service terminal.

In an example, the first status transceiving module 20 includes a first status transceiving unit 22 and a first GRTS protocol unit 23.

The first status transceiving unit 22 is configured to acquire a user number of the client terminal, all contact numbers in an address book, a timestamp and a serial number.

The first GRTS protocol unit 23 is electrically connected to the first status transceiving unit 22, is configured to encapsulate the user number of the client terminal, all the contact numbers in the address book, the timestamp and the serial number, which are acquired by the first status transceiving unit 22, into a status request code according to the GRTS protocol and send the encapsulated status request code to all service terminals by broadcasting, and is further configured to receive a response code containing the current state machine of the service terminal, which is sent by the service terminal, parse the response code to obtain the current state machine of the service terminal, and send the obtained current state machine to the first status transceiving unit 22.

The display module 21 is electrically connected to the first status transceiving module 20, and is configured to display a current status of the service terminal according to the current state machine of the service terminal received by the first status transceiving module 20.

In an example, the display module 21 stores a mapping relationship between different colors and different statues therein, and is configured to display the current status of the service terminal in a corresponding color according to the current state machine of the service terminal acquired by the first status transceiving unit 22 and the mapping relationship between the different colors and the different statues.

In an example, the client terminal further includes a first setting module, which is electrically connected to the first status transceiving module, and is configured to determine whether a status setting of the client terminal is on, control the first status transceiving module to send the status request to the service terminal if the status setting is on, and perform no operation if the status setting is off.

In an example, the client terminal further includes a trigger module, which is electrically connected to the first setting module, and is configured to trigger the first setting module according to one of the following trigger conditions:
initialization is performed;
time set for a timing request expires; and
an address book is started.

In the embodiment, the time for the timing request is a parameter and may be set by a user, a terminal, or application software in a terminal. For example, if the time for the timing request is set to 10 seconds, the client terminal triggers the first setting module every 10 seconds.

### Fifth Embodiment

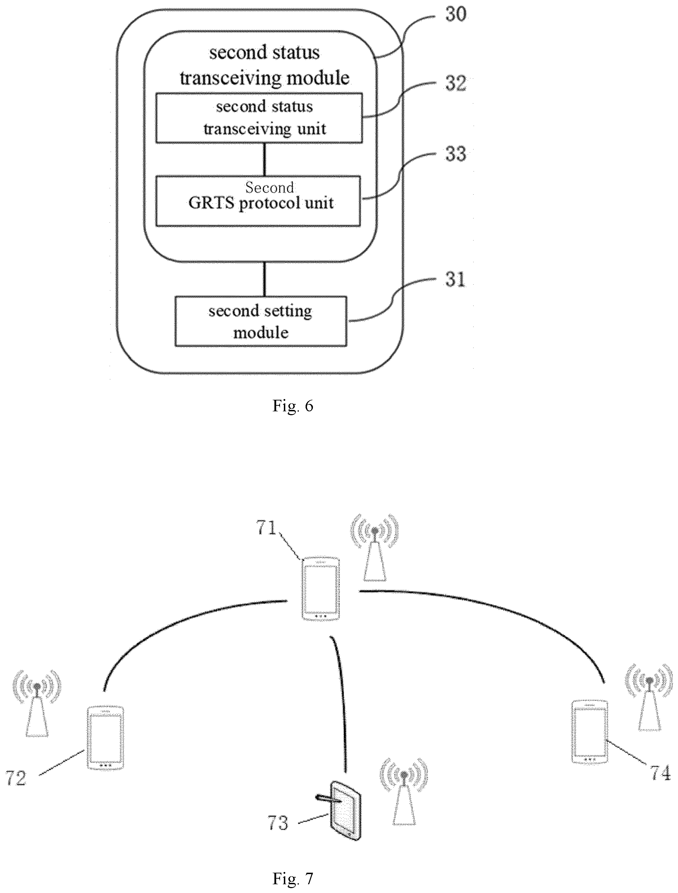

The embodiment provides a service terminal. As shown in Fig. 6, the service terminal includes: a second status transceiving module 30 and a second setting module 31.

The second status transceiving module 30 is configured to receive a status request sent by a client terminal.

In an example, the second status transceiving module 30 includes a second status transceiving unit 32 and a second GRTS protocol unit 33.

The second status transceiving unit 32 is configured to acquire a user number of the client terminal, a user number of the service terminal, a timestamp, a serial number and a current state machine of the service terminal.

The second GRTS protocol unit 33 is electrically connected to the second status transceiving unit 32, is configured to receive a status request code for acquiring the current state machine of the service terminal, which is sent by the client terminal, and parse the status request code, and is further configured to encapsulate the user number of the client terminal, the user number of the service terminal, the timestamp, the serial number and the current state machine of the service terminal, which are acquired by the second status transceiving unit 32, into a response code according to the GRTS protocol, and send the encapsulated response code to the client terminal.

The second setting module 31 is electrically connected to the second status transceiving module 30, and is configured to determine whether to respond to the status request which is sent by the client terminal and received by the second status transceiving module 30.

In an example, the second setting module 31 is configured to determine whether to respond to the status request, which is sent by the client terminal and received by the second status transceiving module 30, according to whether a status setting of the service terminal is on; if the status setting is on, the second setting module 31 controls the second status transceiving module 30 to send the current state machine of the service terminal to the client terminal; and if the status setting is off, the second setting module 31 performs no operation.

The second status transceiving module 30 is further configured to send the current state machine of the service terminal to the client terminal under the control of the second setting module 31.

In an example, the service terminal further includes a status storage module.

The status storage module is electrically connected to the second status transceiving module, and is configured to store the current state machine of the service terminal and send the current state machine of the service terminal to the second status transceiving module.

In the embodiment, the status storage module is configured to monitor a network registration status and the call status of the service terminal, and determine and store the current state machine of the terminal, such as busy and free. The status storage module may send the current state machine of the service terminal to the second status transceiving module according to a preset duration, and the preset duration is a parameter and may be set by a user, preset by a terminal, or set by application software in a terminal. For example, the preset duration is set to 5 seconds or 10 seconds.

### Sixth Embodiment

The embodiment provides a system for acquiring a terminal status, which includes: a client terminal and a service terminal.

The client terminal is configured to send a status request to the service terminal to acquire a current state machine of the service terminal, and the state machine includes a network status and a call status.

The service terminal is configured to receive the status request sent by the client terminal and determine whether to respond to the status request sent by the client terminal.

In an example, the service terminal includes a second status transceiving module and a second setting module.

The second status transceiving module is configured to receive the status request sent by the client terminal.

The second setting module is electrically connected to the second status transceiving module, and is configured to determine whether to respond to the status request which is sent by the client terminal and received by the second status transceiving module.

The second status transceiving module is further configured to send the current state machine of the service terminal to the client terminal under the control of the second setting module.

The second setting module determines whether to respond to the status request, which is sent by the client terminal and received by the second status transceiving module, according to whether a status setting of the service terminal is on; if the status setting is on, the second setting module controls the second status transceiving module to send the current state machine of the service terminal to the client terminal; and if the status setting is off, the second setting module performs no operation.

The second status transceiving module includes a second status transceiving unit and a second GRTS protocol unit.

The second status transceiving unit is configured to acquire a user number of the client terminal, a user number of the service terminal, a timestamp, a serial number and the current state machine of the service terminal.

The second GRTS protocol unit is electrically connected to the second status transceiving unit, is configured to receive a status request code for acquiring the current state machine of the service terminal, which is sent by the client terminal, and parse the status request code, and is further configured to encapsulate the user number of the client terminal, the user number of the service terminal, the timestamp, the serial number and the current state machine of the service terminal, which are acquired by the second status transceiving unit, into a response code according to the GRTS protocol, and send the encapsulated response code to the client terminal.

In an example, the service terminal further includes a status storage module, which is electrically connected to the second status transceiving module, and is configured to store the current state machine of the service terminal and send the current state machine of the service terminal to the second status transceiving module.

The client terminal is further configured to receive the current state machine of the service terminal sent by the service terminal and display a current status of the service terminal according to the current state machine of the service terminal.

In an example, the client terminal includes a first status transceiving module and a display module.

The first status transceiving module is configured to send the status request to the service terminal to acquire the current state machine of the service terminal, and is further configured to receive the current state machine of the service terminal sent by the service terminal.

The first status transceiving module includes a first status transceiving unit and a first GRTS protocol unit.

The first status transceiving unit is configured to acquire the user number of the client terminal, all contact numbers in an address book, a timestamp and a serial number.

The first GRTS protocol unit is electrically connected to the first status transceiving unit, is configured to encapsulate the user number of the client terminal, all the contact numbers in the address book, the timestamp and the serial number, which are acquired by the first status transceiving unit, into a status request code according to the GRTS protocol and send the encapsulated status request code to all service terminals by broadcasting, and is further configured to receive the response code containing the current state machine of the service terminal, which is sent by the service terminal, parse the response code to obtain the current state machine of the service terminal, and send the obtained current state machine to the first status transceiving unit.

The display module stores a mapping relationship between different colors and different statues therein, and is configured to display the current status of the service terminal in a corresponding color according to the current state machine of the service terminal acquired by the first status transceiving unit and the mapping relationship between the different colors and the different statues.

In an example, the display module is electrically connected to the first status transceiving module, and is configured to display the current status of the service terminal according to the current state machine of the service terminal received by the first status transceiving module.

In an example, the client terminal further includes a first setting module, which is electrically connected to the first status transceiving module, and is configured to determine whether a status setting of the client terminal is on, and control the first status transceiving module to send the status request to the service terminal if the status setting is on.

In an example, the client terminal further includes a trigger module, which is electrically connected to the first setting module, and is configured to trigger the first setting module according to one of the following trigger conditions:
initialization is performed;
time set for a timing request expires; and
an address book is started.

The embodiment further provides a system for acquiring a terminal status, which includes an RCS client terminal and an RCS service terminal.

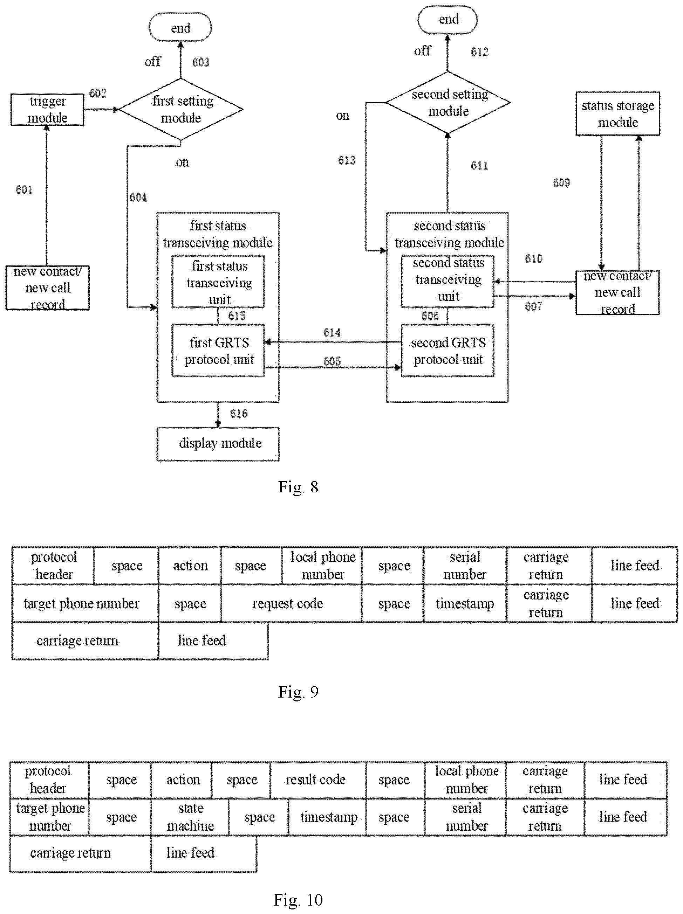

Fig. 7 shows an application environment of the method for acquiring a terminal status. The network architecture in the application environment is a point-to-point network, each terminal in the system has the same level and functions as both a client terminal and a service terminal, and the terminal may be an electronic device such as a mobile phone or a tablet computer. In the application environment, a client terminal 71, a service terminal 72, a service terminal 73 and a service terminal 74 are disposed, and the client terminal 71 sends a status request to each service terminal. As shown in Fig. 8, the system is configured to perform the method for acquiring a terminal status, which includes the following operations 601 to 616.

At the operation 601, a trigger module of the client terminal acquires operation information of entering a new contact/new call record by a user.

At the operation 602, the trigger module triggers a first setting module, and the first setting module reads a current status setting of the client terminal, performs the operation 603 if the status setting is off, and controls a first status transceiving module to perform the operation 604 if the status setting is on.

At the operation 603, the process is terminated.

At the operation 604, a first status transceiving unit in the first status transceiving module prepares corresponding data information, such as a contact number, a timestamp and a serial number, and a first GRTS protocol unit encapsulates the data information such as the contact number, the timestamp and the serial number, which is acquired by the first status transceiving unit, into a status request code.

In the embodiment, an application layer protocol, namely the GRTS protocol, is made to carry out communication between the client terminal and the service terminal. The GRTS protocol, as a request response protocol, is executed above the UDP, and a format of the GRTS protocol is as follows:
request line-message body-end of message

As shown in Fig. 9, a GRTS request message Request is described in detail below, and the Request is:
GRTS1.0 get 130XXXXXXXX 00000001 \r\n
139XXXXXXXX getstatus/1 time \r\n
\r\n
First part: GRTS1.0 is a protocol number, get is an action, 130XXXXXXXX is a local phone number, 00000001 is a message serial number, and \r\n is a carriage return
Second part: 139XXXXXXXX is a target phone number, getstatus/1 is a request code, time is a timestamp, and \r\n is a carriage return
Third part: \r\n is an end of message.

At the operation 605, the first GRTS protocol unit broadcasts the encapsulated data to a service terminal of each contact according to the UDP to acquire a current status of the service terminal of each contact.

At the operation 606, a second status transceiving module of the service terminal (namely a terminal of a certain contact) receives the request. Exemplarily, a second GRTS protocol unit of the second status transceiving module receives the request, and parses the request code according to the GRTS protocol to firstly obtain a GRTS request packet and a user number of the client terminal and then obtain the data information such as the local phone number, the timestamp and the serial number, and then the second GRTS protocol unit sends a parsing result to a second status transceiving unit.

At the operation 607, the second status transceiving unit transmits data of the parsing result to the new contact/new call record.

At the operation 608, the new contact/new call record acquires a current state machine from a status storage module of the service terminal.

At the operation 609, the status storage module responds to the new contact/new call record with the current state machine.

In the embodiment, a call capability and a call status of the terminal are monitored by the status storage module, and the current state machine is calculated according to the call capability and the call status. For example, when the call capability is in an enabled status and the user is dialling a number, the current state machine is set to dialling (namely "12 dialling" in the following description which indicates that a user is dialling a number) according to the protocol; and when the call capability is in a disabled status due to airplane mode/poor network signal/shielded room, the current state machine is set to Service Unavailable (namely "14 Service Unavailable" in the following description which indicates that a phone cannot be connected).

At the operation 610, the new contact/new call record transmits the state machine to the second status transceiving unit of the service terminal.

At the operation 611, a second setting module of the service terminal reads a status setting and determines whether to allow a GRTS request or whether to allow a GRTS request of the user number of the client terminal at the same time according to the status setting, the operation 612 is performed if the status setting is off, and the second setting module controls the second status transceiving module to send the current state machine of the service terminal to the client terminal if the status setting is on, that is, performing the operation 613.

At the operation 612, the process is terminated.

At the operation 613, the second status transceiving unit of the second status transceiving module prepares corresponding data information, such as the local phone number, a peer number, the timestamp, the serial number and the state machine, and the second GRTS protocol unit encapsulates the data information such as the local phone number, the peer number, the timestamp, the serial number and the state machine, which is acquired by the second status transceiving unit, into a response code.

Exemplarily, in the embodiment, the client number, the serial number and the timestamp in the request packet are filled in a response message, then current status information is filled in a state machine field, and a field of local phone number and a field of action are also filled according to the format of the GRTS protocol. As shown in Fig. 10, a GRTS response message Response is described in detail below, and the Response is:
GRTS1.0 ack 200 139XXXXXXXX \r\n
130XXXXXXXX mystatus/1X time 00000001 \r\n \r\n

First part: GRTS1.0 is a protocol number, ack is an action, 200 is a result code and represents success, 139XXXXXXXX is a local phone number, and \r\n is a carriage return

Second part: 130XXXXXXXX is a target phone number, mystatus/1X is a state machine, time is a timestamp, 00000001 is a message serial number, and \r\n is a carriage return

Third part: \r\n is an end of message.

The result code is composed of three numbers, the first number defines a category of the response message, and the response messages are divided into two categories:
1xx: failure message-indicating that the request cannot be responded to correctly; and
2xx: success-indicating that the request is received and responded to normally.

Exemplarily, the result code may be in the following forms:
101: Bad Request, indicating that the request has grammatical errors
102: Forbidden, indicating the request is rejected
103: Service Unavailable, indicating that the request cannot be responded to normally at present, and may be responded to normally later
200: indicating the request is responded to successfully.

The state machine is composed of two numbers:
- 1x:: call status information
- 2x:: to be extended
- 10:: free
- 11:: busy
- 12:: dialling
- 13:: ringing
- 14:: Service Unavailable

At the operation 614, the second GRTS protocol unit encapsulates the data and sends the encapsulated data to the client terminal (namely the requester) according to the UDP.

At the operation 615, the first GRTS protocol unit of the client terminal parses the received data returned by the service terminal to firstly obtain Acknowledgement character (ACK) information of the GRTS protocol and then obtain the target phone number, the timestamp, the serial number and the state machine, and then the second GRTS protocol unit sends a parsing result to the first status transceiving unit.

At the operation 616, the first status transceiving unit verifies the parsed data, and sends the state machine to a display module after the verification is passed, and the display module displays the status information in a window of the new contact/new call record.

Exemplarily, the verification process is performed in such a way that the first status transceiving unit performs verification according to the serial numbers and the target phone numbers, and the serial numbers and the target numbers in the status request code and the response code are required to be in one-to-one correspondence in the verification. If the verification fails, the message is discarded; and if the verification succeeds, duration of "request-response" is determined according to the timestamps and current time of the mobile phone. If the duration exceeds a threshold (which is a parameter and may be preset by a user or a terminal), the response message is discarded and then the request is sent again; and if the duration is within the threshold, the information about the state machine is transmitted to the display module for display. In a state where the request timed out, the service terminal rejects the request or the request has grammatical errors, the request is resent periodically. But if N (N is a parameter and may be set, for example, N=2) times of timeout occur in a row, the periodical resending to the contact is stopped.

The embodiments provide a solution based on the RCS, the RCS enables a new contact module to complete instant messaging with each contact. The status request is sent to the service terminal by broadcasting to acquire the current state machine of the service terminal, which includes the network status and the call status, the current state machine of the service terminal returned by the service terminal is received, and is displayed in the corresponding color according to the mapping relationship between the different colors and the different statues, so that the client terminal acquires the status of the user at the service end.

With the coming of 5G era, network bandwidth increases sharply while network latency decreases greatly. By adopting the technical solution of the embodiments of the present disclosure, the user can acquire the status of each contact in real time and make a dialling decision according to the status of each contact, so that communication among people by telephone is smoother, and the failed calls are avoided, thereby improving user experience.

### Seventh Embodiment

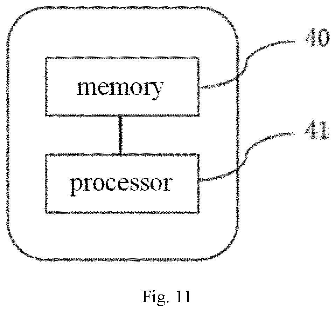

As shown in Fig. 11, the embodiment provides a terminal, including a memory 40 and a processor 41. The memory 40 stores an instruction, and the processor 41 runs the instruction to perform the method for acquiring a terminal status described in the first embodiment, and/or the processor 41 runs the instruction to perform the method for acquiring a terminal status described in the second embodiment.

In the embodiment, when the terminal is used as a client terminal, the processor 41 runs the instruction to perform the method for acquiring a terminal status described in the first embodiment; and when the terminal is used as a service terminal, the processor 41 runs the instruction to perform the method for acquiring a terminal status described in the second embodiment.

### Eighth Embodiment

The embodiment of the present disclosure provides a computer-readable storage medium having a computer program stored therein. When the computer program is executed, the method for acquiring a terminal status described in the first or second embodiment is performed.

It should be understood by those of ordinary skill in the art that the functional modules/units in all or some of the operations, the systems and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

It should be understood that the above embodiments are merely exemplary embodiments employed to illustrate the principle of the present disclosure, and the present disclosure is not limited thereto. Various changes and modifications can be made by those of ordinary skill in the art without departing from the spirit and essence of the present disclosure, and those changes and modifications should be considered within the scope of the present disclosure.

## Claims

1. A method for acquiring a terminal status, which is applied to a client terminal, comprising:
sending a status request to a service terminal to acquire a current state machine of the service terminal, with the state machine comprising a network status and a call status; and
receiving the current state machine of the service terminal sent by the service terminal, and displaying a current status of the service terminal according to the current state machine of the service terminal.

2. The method of claim 1, wherein the sending the status request to the service terminal comprises: sending the status request to the service terminal according to triggering of a trigger condition,
wherein the trigger condition comprises one of:
initialization is performed;
time set for a timing request expires; and
an address book is started.

3. The method of claim 2, wherein
the sending the status request to the service terminal according to the triggering of the trigger condition comprises:
determining whether to send the status request to the service terminal according to a status setting of the client terminal when the trigger condition is satisfied, and sending the status request to the service terminal in response to the status setting being on.

4. The method of claim 3, wherein the sending the status request to the service terminal comprises: sending a status request code for acquiring the current state machine of the service terminal to the service terminal according to a Get Remote Telephony Status (GRTS) protocol.

5. The method of claim 4, wherein the sending the status request code for acquiring the current state machine of the service terminal to the service terminal according to the GRTS protocol comprises:
extracting, by the client terminal, a user number of the client terminal, all contact numbers in an address book, a timestamp and a serial number, encapsulating the user number of the client terminal, all the contact numbers in the address book, the timestamp and the serial number according to the GRTS protocol to obtain the status request code, and sending the encapsulated status request code to all service terminals by broadcasting.

6. The method of claim 1, wherein the receiving the current state machine of the service terminal sent by the service terminal and displaying the current status of the service terminal according to the current state machine of the service terminal comprises:
receiving a response code which contains the current state machine of the service terminal and is sent by the service terminal, parsing the received response code according to the GRTS protocol to obtain the current state machine of the service terminal, and displaying the current status of the service terminal according to the obtained current state machine of the service terminal.

7. The method of claim 6, wherein the displaying the current status of the service terminal according to the current state machine of the service terminal further comprises: displaying the current status of the service terminal in a corresponding color according to a mapping relationship between different colors and different statues.

8. A method for acquiring a terminal status, which is applied to a service terminal, comprising:
receiving a status request sent by a client terminal; and
determining whether to respond to the status request sent by the client terminal.

9. The method of claim 8, wherein the determining whether to respond to the status request sent by the client terminal comprises:
determining whether to respond to the status request sent by the client terminal according to a status setting of the service terminal, responding to the status request in response to the status setting being on, and making no response to the status request in response to the status setting being off;
before receiving the status request sent by the client terminal, the method further comprises:
storing a current state machine of the service terminal.

10. A method for acquiring a terminal status, comprising:
sending a status request by a client terminal to a service terminal to acquire a current state machine of the service terminal, with the state machine comprising a network status and a call status;
receiving, by the service terminal, the status request sent by the client terminal and determining, by the service terminal, whether to respond to the status request sent by the client terminal; and
receiving, by the client terminal, the current state machine of the service terminal sent by the service terminal, and displaying, by the client terminal, a current status of the service terminal according to the current state machine of the service terminal.

11. A client terminal, comprising a first status transceiving module and a display module, wherein
the first status transceiving module is configured to send a status request to a service terminal to acquire a current state machine of the service terminal, with the state machine comprising a network status and a call status, and is further configured to receive the current state machine of the service terminal sent by the service terminal; and
the display module is electrically connected to the first status transceiving module, and is configured to display a current status of the service terminal according to the current state machine of the service terminal received by the first status transceiving module.

12. The client terminal of claim 11, further comprising a first setting module, wherein
the first setting module is electrically connected to the first status transceiving module, and is configured to determine whether a status setting of the client terminal is on, and control the first status transceiving module to send the status request to the service terminal in response to the status setting being on.

13. A service terminal, comprising a second status transceiving module and a second setting module, wherein
the second status transceiving module is configured to receive a status request sent by a client terminal;
the second setting module is electrically connected to the second status transceiving module, and is configured to determine whether to respond to the status request which is sent by the client terminal and received by the second status transceiving module; and
the second status transceiving module is further configured to send a current state machine of a service terminal to the client terminal according to control of the second setting module.

14. A system for acquiring a terminal status, comprising a client terminal and a service terminal, wherein
the client terminal is configured to send a status request to the service terminal to acquire a current state machine of the service terminal, with the state machine comprising a network status and a call status;
the service terminal is configured to receive the status request sent by the client terminal and determine whether to respond to the status request sent by the client terminal; and
the client terminal is further configured to receive the current state machine of the service terminal sent by the service terminal and display a current status of the service terminal according to the current state machine of the service terminal.

15. A terminal, comprising a memory and a processor, wherein the memory stores an instruction, and the processor runs the instruction to perform the method of any one of claims 1 to 9.

16. A computer-readable storage medium having a computer program stored therein, wherein, when the computer program is executed by a processor, the method for acquiring a terminal status of any one of claims 1 to 9 is performed.
